# EUROPEAN PATENT SPECIFICATION

(11) **EP 4 365 140 B1**
(45) Date of publication and mention of the grant of the patent: **25.02.2026**
(21) Application number: 22832988.4
(22) Date of filing: 23.06.2022
(51) Int. Cl.: C02F 1/44, C02F 1/00, B01D 61/02, B01D 61/04, B01D 61/10, B01D 61/12, C02F 103/08

(54) **WATER FILTRATION SYSTEM**
WASSERFILTRATIONSSYSTEM
SYSTÈME DE FILTRATION D'EAU

(30) Priority: 30.06.2021 JP 2021109103
(43) Date of publication of application: 08.05.2024
(73) Proprietor: NTN Corporation, Osaka-shi, Osaka 530-0005 (JP)
(72) Inventor: ONO, Kouhei, Kuwana-shi, Mie 511-0867 (JP)
(74) Representative: Cabinet Netter
(86) International application number: PCT/JP2022/025020
(87) International publication number: WO 2023/276841

(56) References cited:
- WO-A1-2010/046960
- WO-A1-2014/115769
- WO-A1-2017/085754
- WO-A1-2018/069810
- CA-A1- 2 667 749
- JP-A- 2009 074 279
- JP-A- 2015 182 009
- JP-A- 2020 178 517
- JP-A- H09 141 261
- US-A1- 2010 307 973
- US-A1- 2020 346 950
- US-B2- 10 392 269

## Description

### CROSS REFERENCE TO THE RELATED APPLICATION

This application is based on and claims Convention priority to Japanese patent application No. 2021-109103, filed June 30, 2021**.**

### BACKGROUND OF THE INVENTION

### (Field of the Invention)

The present invention relates to a water filtration system that uses natural energy.

### (Description of Related Art)

Water filtration devices have been put to practical use for filtering seawater or freshwater from rivers or the like for drinking water and/or daily use. However, conventional water filtration devices are difficult to use in locations where there is no access to a grid power system.

### [Related Document]

### [Patent Document]

[Patent Document 1] JP Laid-open Patent Publication No. 2011-98315
[Patent Document 2] JP Laid-open Patent Publication No. 2012-90623

CA 2 667 749 discloses a renewable portable stored energy generating apparatus is provided, comp rising a fully contained and stand-alone container.

WO 2018/069810 discloses a device for the desalination of water by means of green energy, with which a reverse osmosis desalination device is powered that converts salt or brackish water into product water. This device has its own local green energy production and is independently controlled by a central control unit that matches the production of product water with the local needs and expectations and with the fluctuating and expected local green energy production.

US 10 392 269 discloses a portable water purification system having a water storage receptacle, a reverse osmosis filter, a pump, and a solar panel array group.

WO 2010/046960 discloses a container type water purifying device, at least a solar battery module is arranged on the top board of a freight transport container. A water purifying device body having a plurality of pumps operated by electricity obtained from the solar battery module and a control panel for controlling the water purifying device body are arranged in the container.

US 2020/346950 discloses a reverse osmosis water desalination system which optimizes use of generated renewable power through active control over feedwater salinity.

US 2010/307973 discloses a mobile unit for the treatment of raw water. It relates to the technical field of mobile installations and processes for potabilizing raw water for the purpose of providing an immediate solution to supplying drinking water to the heart of regions to be treated as being difficult to access.

### SUMMARY OF THE INVENTION

Hence, a technology that uses electric power generated by a solar panel or a wind turbine generator as the power to operate a pump and the like of a water filtration device has been proposed previously (Patent Documents 1, 2). Such a device places burdens of, for instance, separately transporting major mechanisms thereof and substantive assembling on an installation site. This may incur an increased cost for installation of the water filtration device.

An object of the present invention is to provide a water filtration system which has a wider range of possibilities for its installation locations and which has an excellent transportability and can, therefore, lead to a reduced installation cost.

The present invention provides a water filtration system as defined in claim 1, and inter alia including:
a water filtration device;
at least one power generator selected from a wind turbine generator, a photovoltaic generator, and a hydroelectric generator; and
a power supply mechanism configured to supply power from the power generator to a load of the water filtration device to filter untreated water through the water filtration device,
wherein the water filtration system includes a structure which carries the water filtration device, the power generator, and the power supply mechanism, the structure being transportable.

The load in this context refers to electrically operated devices, including a pump configured to pump untreated water into a route.

Such a configuration permits use of at least one power generator selected from a wind turbine generator, a photovoltaic generator, and a hydroelectric generator to provide power to a load of the water filtration device, thereby making it possible to operate the water filtration system even at locations where there is no access to a grid power system. Thus, the possibilities for installation locations of the water filtration system can be increased.

Further, the water filtration system also includes a structure which carries the water filtration device, the power generator and the power supply mechanism, the structure being transportable. Hence, the water filtration system can be transported and installed in an integrated fashion after being at least mostly assembled in a factory or the like. For this reason, it is possible to install the filtration system which has an excellent transportability and can, therefore, lead to a reduced installation cost can be realized.

The water filtration system may further include a solar panel which is separate from the photovoltaic generator and configured to produce power supply for the load, the solar panel being configured to be releasably connected to an electrical connection unit provided to the structure. In the case where the water filtration system includes a separate solar panel, it is possible to provide additional power generation. If, however, the separate solar panel is fixed on the ground or the like, it may not be possible to ensure transportability of the structure, i.e., the water filtration system in the event of emergency, etc. For this reason, the solar panel is releasably connected to an electrical connection unit provided to the structure, so that convenient transfer of the water filtration system can be facilitated.

The power supply mechanism may include a grid power system connection unit configured to receive power supplied from a grid power system. This, for example, makes it possible to use a natural energy power generator such as a wind turbine generator as a primary power supply while using the grid power system to compensate for temporary shortage of power generation or, alternatively, to use the grid power system as a primary power supply while utilizing the natural energy power generator as a backup power supply in the event of a power outage, once the water filtration system is installed at a location where it can connect to the grid power system.

The power supply mechanism includes a control device configured to apply a control to supply power generated by the power generator to the load. The control implemented by the control device in this context involves directing power generated by the power generator into a battery, etc. and drawing the directed power to the load.

The water filtration device includes a tank configured to store filtered water, and the control device includes a tank water level determiner module configured to determine a level of water in the tank, and be configured to control the load to operate when the level of water determined by the tank water level determiner module is equal to or lower than a predetermined value.

The predetermined value in this context is defined as appropriate during, for example, a design phase. For instance, an appropriate value is determined and defined through at least one of experiments or simulations.

According to this configuration, the control device can cause the load to operate when the tank has an unfilled volume which can be filled, so that filtered water can be reliably stored in the tank. Thus, the water filtration device, the power generator and the power supply mechanism can be operated efficiently.

The power supply mechanism includes a battery configured to store power generated by the power generator and to direct the stored power to the load, and the control device includes a charge level determiner module configured to determine a charge level of the battery and be configured to control the load to operate when the charge level determined by the charge level determiner module is equal to or higher than a threshold value.

The threshold value in this context is defined as appropriate during, for example, a design phase. For instance, an appropriate value is determined and defined through at least one of experiments or simulations.

Power generation by a power generator should be limited once the battery for power storage is fully charged because the battery cannot be charged further. Such a limitation on power generation leads to failure to produce power that could otherwise be generated and thus to ineffective operation of the natural energy power generator. According to the configuration, the control device causes the load to operate when the determined charge level is equal to or higher than a threshold value, making it possible to actively carry out water filtration using extra power that might previously have been missed.

The water filtration device includes a route switching module configured to switch routes through which water is treated, and the control device includes an electrical conductivity determiner module configured to determine an electrical conductivity of the untreated water and be configured to control the route switching module to switch the routes in accordance with the electrical conductivity determined by the electrical conductivity determiner module.

The electrical conductivity in this context indicates an ability of untreated water to conduct an electrical current and is the inverse of electrical resistivity.

The relationship between electrical conductivity of untreated water and routes is predefined through experiments or simulations or the like. Such a configuration permits switching between routes for water treatment in accordance with the determined electrical conductivity, so that generated power can be effectively used.

The structure may comprise a shipping container. In this case, the structure can be transferred using a variety of transport means such as truck, railroad, ship, and airplane. With an excellent robustness, the shipping container can protect devices and others stored therein against possible malfunctions that may be caused by vibrations and impacts during transportation.

The present invention encompasses any combination of at least two features disclosed in the claims and/or the specification and/or the drawings. In particular, any combination of two or more of the appended claims should be equally construed as included within the scope of the present invention, the invention being defined in the appended claims.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a perspective view of a water filtration system according to one embodiment of the present invention;
Fig. 2 is a vertical section view of the water filtration system;
Fig. 3 is a block diagram that illustrates the concept configuration of a control system of the water filtration system;
Fig. 4 is a block diagram of a control device of the water filtration system;
Fig. 5 shows the relationship between power generated by photovoltaic power generation and surplus power;
Fig. 6 is a flowchart that shows the conditions for operating a pump of the water filtration system;
Fig. 7 is a flowchart that shows steps of a process for switching routes for to-be-treated water in the water filtration system;
Fig. 8 is a perspective view that shows one example of installation process of the water filtration system;
Fig. 9 is a perspective view of a water filtration system according to another embodiment of the present invention; and
Fig. 10 is a front view that shows a water filtration system according to another embodiment of the present invention, with an openable and closable door opened.

### DESCRIPTION OF THE EMBODIMENTS

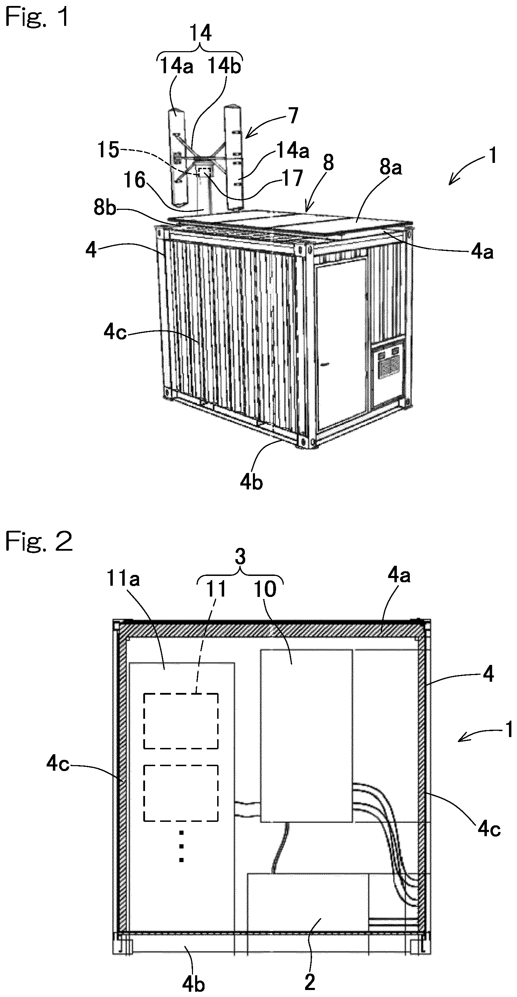

An embodiment of the present invention is described with reference to Fig. 1 to Fig. 8.

As illustrated in Fig. 1, a water filtration system 1 according to one embodiment of the present invention includes: a water filtration device 2 (Fig. 2); natural energy power generators including both of a wind turbine generator 7 and a photovoltaic generator 8; a power supply mechanism 3 of Fig. 2; and a structure 4 which carries the water filtration device 2, the power generators 7, 8 of Fig. 1, and the power supply mechanism 3 (Fig. 2). The water filtration device 2 as shown in Fig. 2 is a device that filters seawater or freshwater from rivers or the like for drinking water and/or daily use. The power supply mechanism 3 supplies electric power from the power generators 7, 8 as shown in Fig. 1 to the load of the water filtration device 2 as shown in Fig. 2 in order to filter untreated water through the water filtration device 2.

### <Structure 4>

The structure 4 houses the water filtration device 2 as well as a control device 10 and a battery 11 of the power supply mechanism 3. The structure 4 is transportable and is a robust, box-shaped structure including, for example, double doors through which the water filtration device 2 and the power supply mechanism 3 can be carried in and out. As illustrated in Fig. 1, the structure 4 includes a top wall 4a and a bottom wall 4b that are substantially rectangular in shape, and four peripheral walls 4c between the top wall 4a and the bottom wall 4b, thereby forming a generally cuboidal shape as a whole. In particular, the structure 4 comprises a shipping container.

The "shipping container" used herein is preferably a container having a size that complies with a standard for freight transport containers - such as, for example, a domestic standard for freight containers of a country in which the container is transported. For instance, the "standard" in this context may be a standard established by a relevant domestic administrative agency in that country or an international organization such as the International Organization for Standardization (ISO), or may even be a JR container which serves as a de-facto standard for railroad freight transport containers in Japan.

Being configured as a shipping container, the structure 4 can be transferred using a variety of transport means such as truck, railroad, ship, and airplane. With an excellent robustness, the shipping container can also protect devices and others stored therein against possible malfunctions that may be caused by vibrations and impacts during transportation.

### <Wind Turbine Generator 7>

The wind turbine generator 7 includes a wind turbine 14 and a generator 15 that can be driven by the wind turbine 14 to generate power. The wind turbine 14 is configured as a vertical axis wind turbine. In particular, the wind turbine 14 includes a plurality of blades 14a (e.g., two blades 14a in the instant example) and a blade support 14b providing support for the blades 14a. Each of the blades 14a extends in the vertical direction, whereas the blade support 14b is supported on an upper end of a tower 16 so as to be rotatable about the vertical axis by means of a bearing arrangement (not shown). The two blades 14a are positioned angularly apart from each other by 180 degrees about the axis of the tower 16. Further, the tower 16 is secured centrally to an upper part of one of the peripheral walls 4c of the structure 4.

The generator 15 of the wind turbine generator 7 is disposed inside a generator casing 17 that is attached to the top of the tower 16. Stationary race(s) of the bearing arrangement is/are fitted to the generator casing 17, whereas rotary race(s) of the bearing arrangement is/are coupled to the blade support 14b. The generator 15 generates power as a rotor of the generator 15 rotates inside the generator casing 17 along with the rotary race(s) in response to the revolutions of the wind turbine 14. For example, an induction generator or a synchronous generator can be used for the generator 15.

A vertical axis wind turbine is suited as the wind turbine 14 for use with the wind turbine generator 7 that is provided to the transportable structure 4 in that a vertical axis wind turbine can be configured in a relatively small size but still can receive wind to generate power. Nevertheless, the wind turbine may alternatively be a horizontal axis wind turbine.

### <Photovoltaic Generator 8>

The photovoltaic generator 8 includes a solar panel 8a that receives sunlight for photoelectric conversion and a panel mount 8b that attaches the solar panel 8a to the structure 4. In the instant example, the solar panel 8a is attached onto the top wall 4a of the structure 4 by means of the panel mount 8b. Depending on the direction of solar radiation or the installation environment, the solar panel 8a may alternatively be disposed on a given one of the peripheral walls 4c of the structure 4 or deployed around the structure 4. The panel mount 8b may be equipped with a mechanism capable of changing the angle of the solar panel 8a according to the direction of the sun.

### <Water Filtration Device 2>

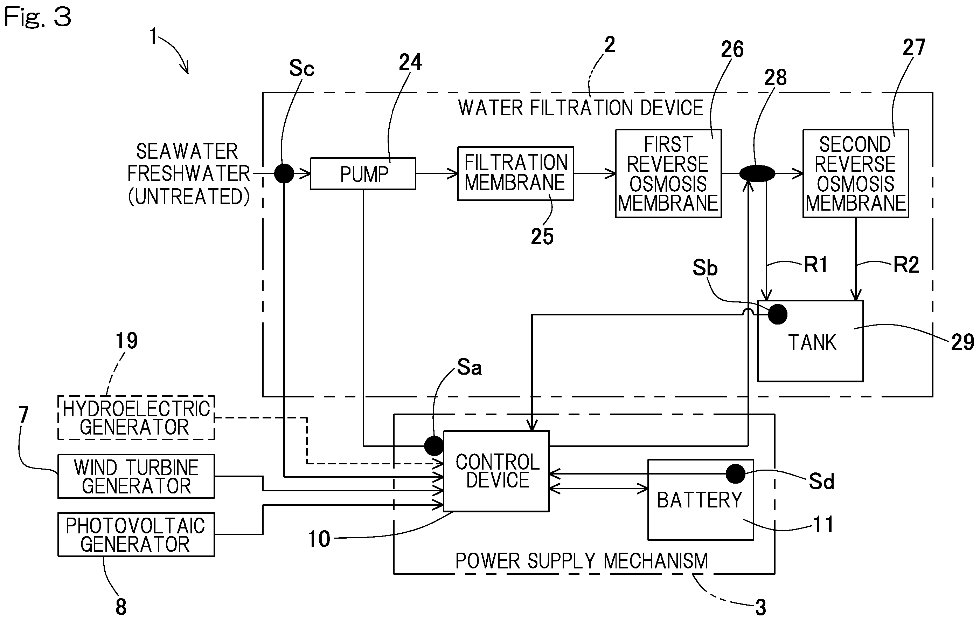

As illustrated in Fig. 3, this water filtration device 2 includes: a pump 24 that is a load; a filtration membrane 25; first and second reverse osmosis membranes 26, 27; a switching valve 28 that is a route switching module; and a tank 29. The water filtration device 2 supplies untreated water, which is pumped up from bulk seawater or freshwater, through routes R1, R2 including pipes and the like to filter the water, and stores the filtered water in the tank 29. The pump 24, the filtration membrane 25, the first reverse osmosis membrane 26, the switching valve 28, the second reverse osmosis membrane 27, and the tank 29 are connected through pipes so as to be successively arranged along the direction of flow in the routes R1, R2.

The pump 24 pumps up seawater or freshwater and forces the to-be-treated water through the routes R1, R2, while applying a pressure for reverse osmosis to the to-be-treated water at the first and second reverse osmosis membranes 26, 27. The filtration membrane 25 is a separation membrane that removes turbidity prior to filtration through the first reverse osmosis membrane 26. The first reverse osmosis membrane 26 applies a pressure equal to or greater than an osmotic pressure to one side, i.e., the high concentration side with respect to the membrane in order to separate impurities from the to-be-treated water following a treatment through the filtration membrane 25. Thus, the first reverse osmosis membrane 26 allows only the solvent to pass through it but not the solute (salts and the like). The second reverse osmosis membrane 27 is equivalent to the first reverse osmosis membrane 26.

The water following a treatment through the first reverse osmosis membrane 26 passes through the switching valve 28 to be stored in the tank 29 directly or after having been filtered further through the second reverse osmosis membrane 27. As will be discussed later, a first route R1 is used to treat freshwater, in which the water passes through the first reverse osmosis membrane 26 and the switching valve 28 before it is stored in the tank 29, whereas a second route R2 is used to treat seawater, in which the water passes through the first reverse osmosis membrane 26, the switching valve 28, and the second reverse osmosis membrane 27 before it is stored in the tank 29. As the switching valve 28, for instance, an electromagnetic switching valve may be used which moves a spool to switch between the flow channels in response to a command from the control device 10.

### <Control System and the Like>

The power supply mechanism 3 includes a control device 10 and a battery 11. The battery 11 stores power generated by the wind turbine generator 7 and the photovoltaic generator 8. The stored power is supplied to the pump 24. There may be a drop in the power output from the power generators 7, 8 depending on the season. Still, the battery 11 installed in the power supply mechanism 3 has the storage capacity for providing power for up to several days, so that non-routine operation is possible in case of emergency. The battery 11 is housed in a rechargeable battery housing box 11a to be installed inside the structure 4, as shown in Fig. 2.

As illustrated in Fig. 3, the control device 10 is comprised of, among other things, a computer, a program that is executed by the computer, and a variety of electronic circuits. The control device 10 applies a control to direct power generated by the power generators 7, 8 into the battery 11 and to draw the directed power in the battery 11 to the pump 24. By way of example, the control device 10 includes an AC to DC converter that converts AC power generated by the power generators 7, 8 to a DC voltage that can be stored in the battery 11, and an inverter that converts power stored in the battery 11 to a sinusoidal AC wave, like that of commercial AC power, or to a square AC wave.

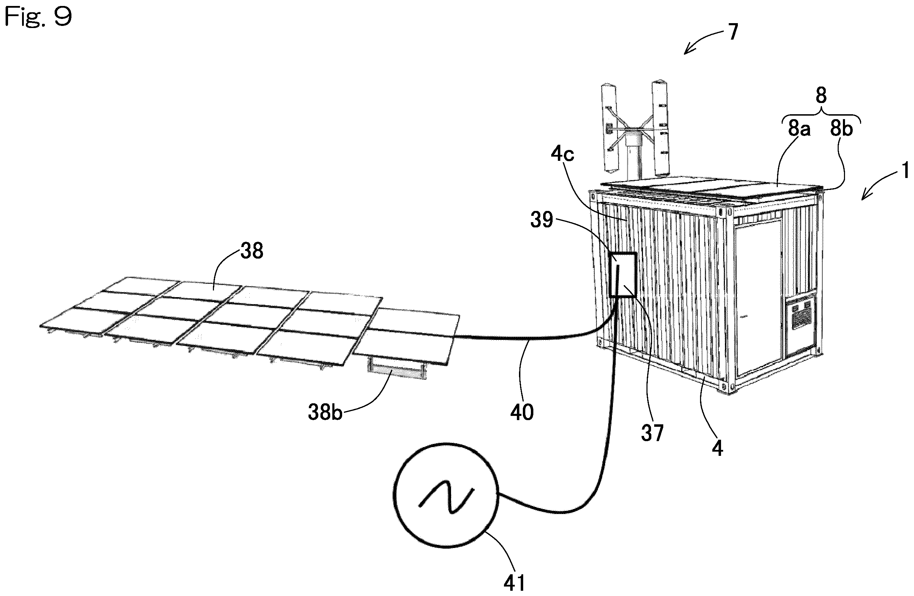

Now, access to natural energy is bound by constraints; energy that can be generated therefrom varies greatly between different seasons. Meanwhile, the desired amount of water to be generated has little variation throughout the year. Thus, for instance, in those seasons such as winter in which the level of power generated tends to fall, operation solely relying on natural energy can be challenging. As such, an effective measure that can be taken thereagainst is to compensate for a drop - e.g., a seasonal drop - in the level of power generated (Fig. 9) through a technique which will be discussed later, or to get the most out of the time in which power generation is possible.

### <Sensors and the Like (Loads)>

The water filtration system 1 is provided with a power measuring device Sa used to measure a power consumed by the pump 24, a water level sensor Sb used to determine a level of water in the tank 29, an electrical conductivity sensor Sc used to determine an electrical conductivity of untreated water, and a voltage sensor Sd used to determine a voltage of the battery 11. The system may be powered using the natural energy power generators. For example, a float-based level sensor that uses a float to measure the position of the liquid level of the tank 29 or a pressure-based level sensor that measures the position of the liquid level of the tank 29 on the basis of the pressure at the bottom of the vessel may be employed as the water level sensor Sb. For example, a conductivity-based concentration sensor that measures an electrolyte concentration on the basis of the conductivity of a solution may be employed as the electrical conductivity sensor Sc.

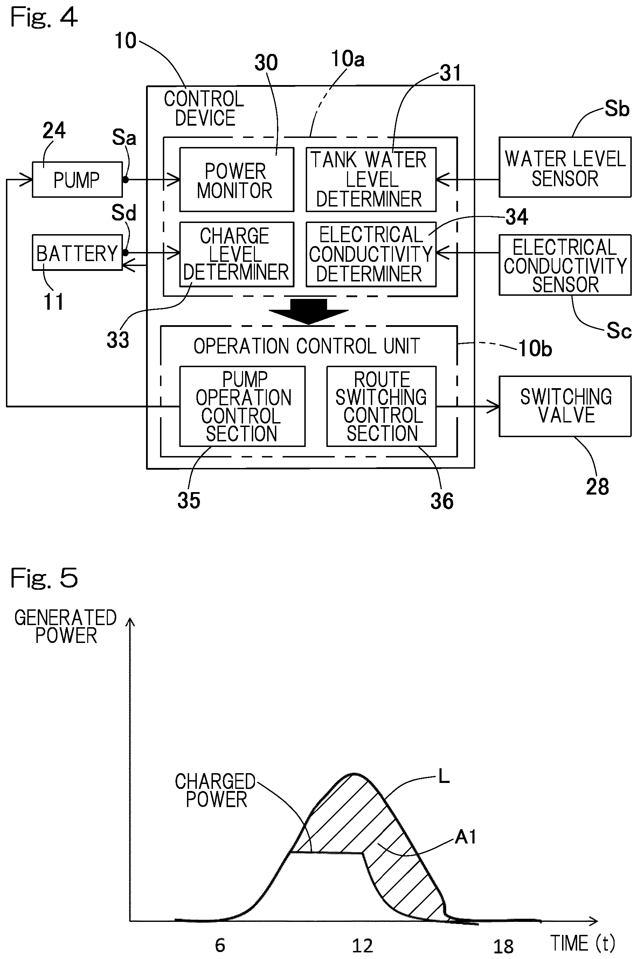

As illustrated in Fig. 4, the control device 10 includes a determiner unit 10a configured to determine each of the outputs from the sensors and the like, and an operation control unit 10b. The determiner unit 10a includes a power monitoring module 30, a tank water level determiner module 31, a charge level determiner module 33, and an electrical conductivity determiner module 34. The power monitoring module 30 monitors the power of the pump 24 by determining the output from the power measuring device Sa constantly or regularly. The tank water level determiner module 31 determines the level of water in the tank 29 (Fig. 3) by determining the output from the water level sensor Sb. The charge level determiner module 33 determines the charge level of the battery 11 by determining the output from the voltage sensor Sd. The electrical conductivity determiner module 34 determines the electrical conductivity of the untreated water by determining the output from the electrical conductivity sensor Sc.

The operation control unit 10b includes a pump operation control section 35 and a route switching control section 36. The pump operation control section 35 in the instant example controls the pump 24 to operate when the level of water determined by the tank water level determiner module 31 is equal to or lower than a predetermined value and, at the same time, the charge level of the battery 11 detected by the charge level determiner module 33 is equal to or higher than a threshold value (e.g., full charge).

Fig. 5 shows the relationship between power generated by photovoltaic power generation and surplus power. The hatched area A1 in Fig. 5 indicates the amount of power that is missed, and the boundary line L of the area A1 indicates the amount of power that can be produced. In general, photovoltaic power generation can only generate power during daytime, and power generation should be limited once the battery 11 (Fig. 4) is fully charged because the battery cannot be charged further. For example, the control device 10 of Fig. 4 imposes a limitation on power generation by the power generators 7, 8 (Fig. 3) once it is determined that the battery 11 is fully charged. The expression "impose a limitation on power generation" and the like in this context may mean to stop power generation. Such a limitation on power generation leads to inefficiency, so that it is desirable to make use of the time period during which power generation is limited to actively carry out water filtration.

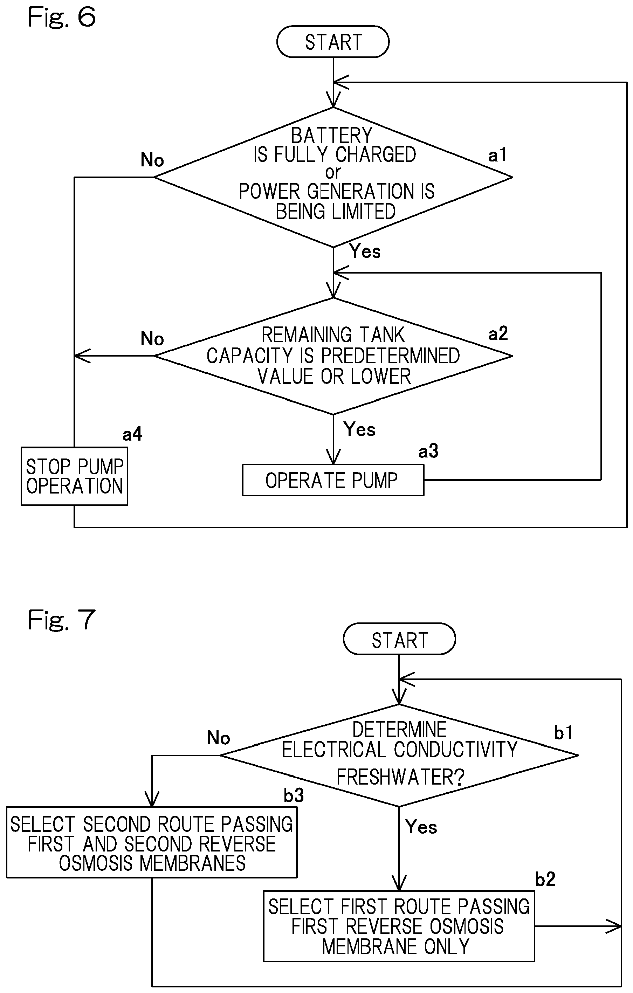

Specifically, the pump is operated in accordance with the flowchart shown in Fig. 6. This control flow is executed by the pump operation control section 35 of Fig. 4. As shown in Fig. 6, once this process is started, and when the battery is fully charged or power generation is being limited (step a1: Yes), it is determined whether or not the level of water in the tank 29 (Fig. 4) is equal to or below a predetermined value (step a2). If the level of water is equal to or below the predetermined value (step a2: Yes), the pump is caused to operate (step a3). Then, the process returns to step a2. When it is determined in step a1 that the battery is not fully charged or power generation is not being limited (step a1: No), operation of the pump is stopped (step a4). In step a2, if the level of water exceeds the predetermined value (step a2: No), operation of the pump is stopped (step a4). Following step a4, the process returns to step a1.

It is also effective in terms of power to change the routes or the so-called filtering routes depending on untreated water, as shown in Fig. 7. This control of Fig. 7 is executed by the route switching control section 36 of Fig. 4. As shown in Fig. 7, once this process is started, and if it is determined that untreated water that has been pumped up is freshwater on the basis of the determined electrical conductivity (step b1: Yes), the switching valve 28 (Fig. 3) is controlled to select the first route R1 (Fig. 3) which only passes the first reverse osmosis membrane 26 (Fig. 3), of the first and second reverse osmosis membranes 26, 27 (Fig. 3) (step b2). Then, the process returns to step b1. When the first route R1 (Fig. 3) is selected, power consumption may be reduced as compared to when the second route R2 (Fig. 3) is selected. If it is determined that untreated water that has been pumped up is seawater on the basis of the electrical conductivity (step b1: No), the switching valve 28 (Fig. 3) is controlled to select the second route R2 (Fig. 3) which passes the first and second reverse osmosis membranes 26, 27 (Fig. 3) (step b3). Then, the process returns to step b1. In this way, the route switching control section 36 of the control device 10 of Fig. 4 controls the switching valve 28 (Fig. 3) so as to switch between the first and second routes R1, R2 (Fig. 3) in accordance with the electrical conductivity determined by the electrical conductivity determiner module 34.

### <Installation of Water Filtration System>

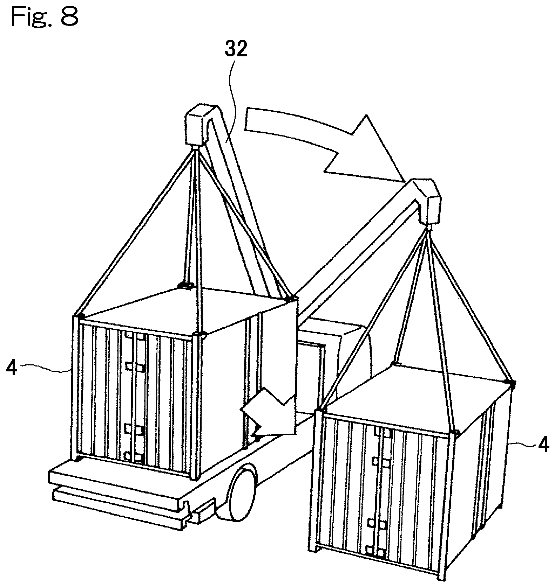

As illustrated in Fig. 8, the structure 4 housing, among others, the water filtration device 2 and the power supply mechanism 3 of Fig. 2 is transported to a desired installation site by, for example, a truck loader crane (or a truck-mounted crane). Then, the structure 4 is unloaded by using a crane 32 on the truck-mounted crane. Alternatively, a forklift, a gantry crane (both not shown), etc. may be used to unload the structure 4 from a given one of said variety of transport means.

Subsequently, the wind turbine generator and the photovoltaic generator housed in the structure 4 are deployed out of the container and are attached to desired locations on the structure 4. It should be noted that the structure 4 may be transported with at least one of the wind turbine generator and the photovoltaic generator attached to the desired locations on the structure 4. Then, each of the power generators 7, 8 illustrated in Fig. 1 is ready to initiate power generation so that the water filtration system 1 can begin its operation.

### <Effects and Advantages>

The water filtration system discussed thus far permits use of the wind turbine generator 7 and the photovoltaic generator 8 of Fig. 1 to provide power to the pump 24 of the water filtration device 2 of Fig. 3, thereby making it possible to operate the water filtration system 1 even at locations where there is no access to a grid power system. Thus, the possibilities for installation locations of the water filtration system 1 can be increased.

The water filtration system also includes the structure 4 of Fig. 1 which carries the water filtration device 2, the power generators 7, 8 and the power supply mechanism 3, the structure 4 being transportable. Hence, the water filtration system 1 can be transported and installed in an integrated fashion after being at least mostly assembled in a factory or the like. For this reason, it is possible to install the water filtration system 1 more conveniently than a conventional construction which involves substantial assembling work on an installation site. As such, a water filtration system 1 which has an excellent transportability and can, therefore, lead to a reduced installation cost can be realized.

The control device 10 of Fig. 3 causes the pump 24 to operate when the tank 29 has an unfilled volume which can be filled and, at the same time, the charge level of the battery 11 is equal to or higher than the threshold value. Thus, the water filtration device 2, the power generators 7, 8 and the power supply mechanism 3 can be operated efficiently. It is also possible to actively carry out water filtration using extra power that might previously have been missed.

In addition, the routes R1, R2 for water treatment can be switched in accordance with the determined electrical conductivity, so that generated power can be effectively used.

### <Further Embodiments>

In the following description, the same reference numerals are used to denote features that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

### <Field-Assembled Solar Panel>

As illustrated in Fig. 9, the water filtration system may further include a solar panel 38 which is separate from the photovoltaic generator 8 and produces power supply for the pump 24 (Fig. 3), which is a load. Note that, when the water filtration system includes the separate solar panel 38, this solar panel 38 will be secured on the ground or the like. Therefore, it may not be possible to ensure transportability of the water filtration system 1 once an electrical connection is established between the control device 10 (see Fig. 2) in the structure 4 and the separate solar panel 38 which is secured on the ground or the like. Thus, to facilitate the transportation of the water filtration system 1 to another location in the event of emergency, etc., the separate solar panel 38 should be made easily removable.

Hence, the separate solar panel 38 is configured to be releasably connected to an electrical connection unit 39 provided to the structure 4. The electrical connection unit 39 in the form of a connector is, for example, located at one of the peripheral walls 4c of the structure 4. The connector is electrically connected to the control device 10 (Fig. 3) inside the structure 4. The separate solar panel 38 is installed to the ground through a panel mount 38b and thereby forms a so-called, field-assembled solar panel which is configured to be releasably connected to the electrical connection unit 39 via a power cable 40. When the separate solar panel 38 is connected to the electrical connection unit 39, additional power can be generated. When the separate solar panel 38 is disconnected from the electrical connection unit 39, convenient transfer of the water filtration system 1 can be facilitated.

### <Grid Power System Connection Unit 37>

The power generation unit 3 (Fig. 3) may include a grid power system connection unit 37 that receives power supplied from a grid power system 41. This, for example, makes it possible to use the wind turbine generator 7 or the photovoltaic generator 8 as a primary power supply while using the grid power system 41 to compensate for temporary shortage of power generation or, alternatively, to use the grid power system 41 as a primary power supply while utilizing the wind turbine generator 7 or the photovoltaic generator 8 as a backup power supply in the event of a power outage, once the water filtration system 1 is installed at a location where it can connect to the grid power system 41.

### <System including Hydroelectric Generator>

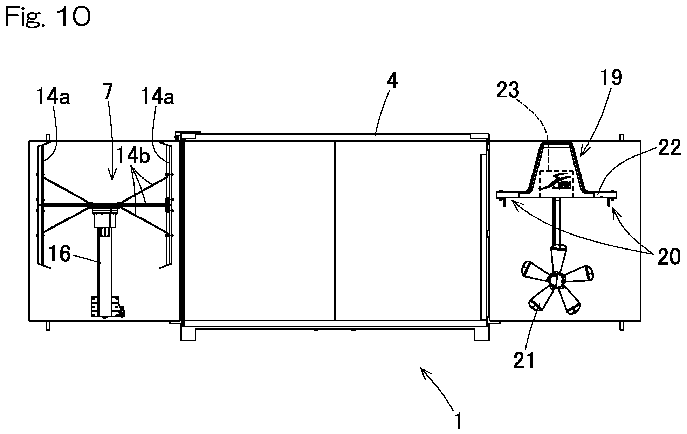

As illustrated in Fig. 10, the water filtration system 1 may further include a hydroelectric generator 19 which is capable of being installed in a water channel and capable of being housed in and removed from the structure 4. This hydroelectric generator 19 may include, for example, a mount 20 configured to be installed in a water channel, a hydroelectric turbine 21, a frame 22 which holds the hydroelectric turbine 21, and a power generator 23 which is supported by the frame 22 and configured to generate power as the hydroelectric turbine 21 rotates.

The water filtration system 1 including the wind turbine generator 7, the photovoltaic generator 8 and the hydroelectric generator 19 as shown in Fig. 3 can efficiently make use of natural energy according to the surrounding environment of the area in which the water filtration system 1 is installed. The combination of multiple types of natural energy power generation makes it possible to store power in a way adapted to weather changes. Such a water filtration system also provides the same effects and advantages as the previously described embodiments.

The water filtration system 1 may include at least one power generator selected from the wind turbine generator 7, the photovoltaic generator 8 and the hydroelectric generator 19.

The pump operation control section 35 of the control device 10 illustrated in Fig. 4 may control the pump 24 to operate when at least the condition that the level of water determined by the tank water level determiner module 31 is equal to or lower than the predetermined value is satisfied.

The pump operation control section 35 of the control device 10 may control the pump 24 to operate when at least the condition that the charge level of the battery 11 is equal to or higher than the threshold value is satisfied.

As an alternative to the shipping container, the structure may comprise a simple transportable building.

In the case where, for example, the water filtration system is intended to be used to filter freshwater only, the second reverse osmosis membrane and the switching valve may be omitted.

### <Proposed Reference Examples>

As proposed reference example, a water filtration system including a mechanism configured to automatically distinguish between freshwater and seawater is proposed. Referring to Fig. 3, this water filtration system may be described as follows:
A water filtration system including
a water filtration device 2; and
a control device 10 configured to apply a control to supply power to a load of the water filtration device 2 to filter untreated water through the water filtration device 2,
wherein the water filtration device 2 includes a route switching module 28 configured to switch routes R1, R2 through which water is treated, and
the control device 10 includes an electrical conductivity determiner module 34 (Fig. 4) configured to determine an electrical conductivity of the untreated water, and is configured to control the route switching module 28 to switch the routes R1, R2 in accordance with the electrical conductivity determined by the electrical conductivity determiner module 34 (Fig. 4).

Such a configuration permits automatic switching between the routes R1, R2 for water treatment in accordance with the determined electrical conductivity, i.e., depending on whether the water is freshwater or seawater, so that generated power can be effectively used.

While configurations to carry out the present invention have thus far been described on the basis of embodiments, the embodiments disclosed herein are illustrative and not restrictive in all respects. The scope of the present invention is to be indicated by the appended claims rather than by the foregoing description, and is meant to embrace any changes made within the meaning and range of equivalency to the appended claims.

### [Reference Numerals]

- 1: water filtration system
- 2: water filtration device
- 3: power supply mechanism
- 4: structure
- 7: wind turbine generator
- 8: photovoltaic generator
- 10: control device
- 11: battery
- 24: pump (load)
- 28: switching valve (route switching module)
- 29: tank
- 31: tank water level determiner module (load)
- 33: charge level determiner module (load)
- 34: electrical conductivity determiner module (load)
- 37: grid power system connection unit (load)
- 38: solar panel
- 39: electrical connection unit
- 41: grid power system

## Claims

1. A water filtration system (1) comprising:
a water filtration device (2);
at least one power generator (7, 8) selected from a wind turbine generator, a photovoltaic generator, and a hydroelectric generator; and a power supply mechanism (3) configured to supply power from the power generator (7, 8) to a load comprising a pump (24) of the water filtration device to filter untreated water through the water filtration device (2),
wherein the water filtration system (1) includes a structure (4) which carries the water filtration device (2), the power generator (7, 8), and the power supply mechanism (3), the structure (4) being transportable,
the water filtration device (2) includes the pump (24), and a tank (29) configured to store filtered water, a filtration membrane (25) and first and second reverse osmosis membranes (26, 27),
the power supply mechanism (3) includes a control device (10) configured to apply a control to supply power generated by the power generator (7, 8) to the load, and a battery (11) configured to store power generated by the power generator (7, 8) and to direct the stored power to the load,
the control device (10) includes a charge level determiner module (33) configured to determine a charge level of the battery (11) and a tank water level determiner module (31) configured to determine a level of water in the tank (29),
the control device (10) is configured to execute a control including steps of:
determining whether the charge level of the battery (11) is equal to or
higher than a threshold value, using the charge level determiner module (33); when the charge level of the battery (11) is equal to or higher than the threshold value, determining whether the level of water in the tank (29) is equal to or below a predetermined value, using the tank water level determiner module (31); and
when the level of water in the tank is equal to or below the predetermined value, causing the pump (24) to operate, the water filtration device includes a route switching module (36) configured to switch routes through which water is treated, the routes comprising a first route which passes only the first reverse osmosis membrane (26) of the first and second reverse osmosis membranes, and a second route which passes both of the first and second reverse osmosis membranes (26, 27), and
the control device (10) includes an electrical conductivity determiner module (34) configured to determine an electrical conductivity of the untreated water and configured to control the route switching module (36) to switch the routes in accordance with the electrical conductivity determined by the electrical conductivity determiner module (34), the route switching module (36) comprising an electromagnetic switching valve (28) configured to move a spool to switch between the routes in response to a command from the control device (10).

2. The water filtration system (1) as claimed in claim 1, further
comprising a solar panel which is separate from the photovoltaic generator and configured to produce power supply for the load, the solar panel being configured to be releasably connected to an electrical connection unit (39) provided to the structure (4).

3. The water filtration system (1) as claimed in claim 1 or 2, wherein the power supply mechanism (3) includes a grid power system connection unit (37) configured to receive power supplied from a grid power system (41).

4. The water filtration system (1) as claimed in any one of claims 1 to 3, wherein the structure (4) comprises a shipping container.

## Patentansprüche

1. Wasserfiltrationssystem (1), umfassend:
eine Wasserfiltrationsvorrichtung (2);
mindestens einen Stromerzeuger (7, 8), der aus einem Windturbinengenerator, einem Photovoltaikgenerator und einem hydroelektrischen Generator ausgewählt ist; und einen Stromversorgungsmechanismus (3), der so eingerichtet ist, dass er Strom von dem Stromerzeuger (7, 8) zu einer Last liefert, die eine Pumpe (24) der Wasserfiltrationsvorrichtung umfasst, um unbehandeltes Wasser durch die Wasserfiltrationsvorrichtung (2) zu filtern,
wobei das Wasserfiltrationssystem (1) eine Struktur (4) enthält, die die Wasserfiltrationsvorrichtung (2), den Stromgenerator (7, 8) und den Stromversorgungsmechanismus (3) trägt, wobei die Struktur (4) transportierbar ist,
die Wasserfiltrationsvorrichtung (2) die Pumpe (24) und einen Tank (29) enthält, der so eingerichtet ist, dass er gefiltertes Wasser speichert, und eine Filtrationsmembran (25) und eine erste und eine zweite Umkehrosmose-Membranen (26, 27),
der Stromversorgungsmechanismus (3) eine Steuervorrichtung (10) enthält, die so eingerichtet ist, dass sie eine Steuerung anwendet, um den von dem Stromgenerator (7, 8) erzeugten Strom an die Last zu liefern, und eine Batterie (11), die so eingerichtet ist, dass sie den von dem Stromgenerator (7, 8) erzeugten Strom speichert und den gespeicherten Strom an die Last leitet,
die Steuervorrichtung (10) ein Ladezustandsbestimmungsmodul (33) enthält, das so eingerichtet ist, dass es einen Ladezustand der Batterie (11) bestimmt, und ein Tankwasserstandsbestimmungsmodul (31), das so eingerichtet ist, dass es einen Wasserstand in dem Tank (29) bestimmt,
die Steuervorrichtung (10) so eingerichtet ist, dass sie eine Steuerung ausführt, die folgende Schritte enthält:
Bestimmen, ob der Ladezustand der Batterie (11) gleich oder höher als ein Schwellenwert ist, mithilfe des Ladezustandsbestimmungsmoduls (33); wenn der Ladezustand der Batterie (11) gleich oder höher als der Schwellenwert ist, Bestimmen, ob der Wasserstand in dem Tank (29) gleich oder niedriger als ein vorbestimmter Wert ist, mithilfe des Tankwasserstandsbestimmungsmoduls (31); und
wenn der Wasserstand in dem Tank gleich oder niedriger als der vorbestimmte Wert ist, Veranlassen, dass die Pumpe (24) arbeitet, wobei die Wasserfiltrationsvorrichtung ein Wegeumschaltmodul (36) enthält, das so eingerichtet ist, dass es Wege umschaltet, durch die Wasser behandelt wird, wobei die Wege einen ersten Weg umfassen, der nur die erste Umkehrosmose-Membran (26) der ersten und zweiten Umkehrosmose-Membranen passiert, und einen zweiten Weg, der sowohl die erste als auch die zweite Umkehrosmose-Membran (26/27) passiert, und
die Steuervorrichtung (10) ein elektrisches Leitfähigkeitsbestimmungsmodul (34) enthält, das so eingerichtet ist, dass es eine elektrische Leitfähigkeit des unbehandelten Wassers bestimmt, und so eingerichtet ist, dass es das Wegeumschaltmodul (36) steuert, um die Wege entsprechend der von dem elektrischen Leitfähigkeitsbestimmungsmodul (34) bestimmten elektrischen Leitfähigkeit zu schalten, wobei das Wegeumschaltmodul (36) ein elektromagnetisches Umschaltventil (28) umfasst, das so eingerichtet ist, dass es eine Spule zum Umschalten zwischen den Wegen als Reaktion auf einen Befehl von der Steuervorrichtung (10) bewegt.

2. Wasserfiltrationssystem (1) nach Anspruch 1, ferner umfassend ein Solarpaneel, das von dem Photovoltaikgenerator getrennt und so eingerichtet ist, dass es die Stromversorgung für die Last erzeugt, wobei das Solarpaneel so eingerichtet ist, dass es lösbar mit einer an der Struktur (4) bereitgestellten elektrischen Anschlusseinheit (39) verbunden ist.

3. Wasserfiltrationssystem (1) nach Anspruch 1 oder 2, wobei der Stromversorgungsmechanismus (3) eine Netzstromsystem-Anschlusseinheit (37) enthält, die so eingerichtet ist, dass sie Strom empfängt, der von einem Netzstromsystem (41) geliefert wird.

4. Wasserfiltrationssystem (1) nach einem der Ansprüche 1 bis 3, wobei die Struktur (4) einen Versandbehälter umfasst.

## Revendications

1. Système de filtration d'eau (1) comprenant :
un dispositif de filtration d'eau (2) ;
au moins un générateur d'énergie (7, 8) choisi parmi un générateur d'éolienne, un générateur photovoltaïque et un générateur hydroélectrique ; et un mécanisme d'alimentation en énergie (3) configuré pour fournir de l'énergie à partir du générateur d'énergie (7, 8) à une charge comprenant une pompe (24) du dispositif de filtration d'eau pour filtrer de l'eau non traitée à travers le dispositif de filtration d'eau (2),
dans lequel le système de filtration d'eau (1) inclut une structure (4) qui porte le dispositif de filtration d'eau (2), le générateur d'énergie (7, 8), et le mécanisme d'alimentation en énergie (3), la structure (4) étant transportable,
le dispositif de filtration d'eau (2) inclut la pompe (24), et un réservoir (29) configuré pour stocker de l'eau filtrée, une membrane de filtration (25) et des première et seconde membranes d'osmose inverse (26, 27),
le mécanisme d'alimentation en énergie (3) inclut un dispositif de commande (10) configuré pour appliquer une commande pour fournir de l'énergie générée par le générateur d'énergie (7, 8) à la charge, et une batterie (11) configurée pour stocker de l'énergie générée par le générateur d'énergie (7, 8) et pour diriger l'énergie stockée vers la charge,
le dispositif de commande (10) inclut un module de détermination de niveau de charge (33) configuré pour déterminer un niveau de charge de la batterie (11) et un module de détermination de niveau d'eau de réservoir (31) configuré pour déterminer un niveau d'eau dans le réservoir (29),
le dispositif de commande (10) est configuré pour exécuter une commande comportant des étapes :
déterminer si le niveau de charge de la batterie (11) est supérieur ou égal à une valeur seuil, à l'aide du module de détermination de niveau de charge (33) ; lorsque le niveau de charge de la batterie (11) est supérieur ou égal à la valeur seuil, déterminer si le niveau d'eau dans le réservoir (29) est inférieur ou égal à une valeur prédéterminée, à l'aide du module de détermination de niveau d'eau de réservoir (31) ; et
lorsque le niveau d'eau dans le réservoir est inférieur ou égal à la valeur prédéterminée, amener la pompe (24) à fonctionner, le dispositif de filtration d'eau inclut un module de commutation d'itinéraire (36) configuré pour commuter des itinéraires par lesquels l'eau est traitée, les itinéraires comprenant un premier itinéraire qui ne traverse que la première membrane d'osmose inverse (26) des première et seconde membranes d'osmose inverse, et un second itinéraire qui traverse à la fois les première et seconde membranes d'osmose inverse (26, 27), et
le dispositif de commande (10) inclut un module de détermination de conductivité électrique (34) configuré pour déterminer une conductivité électrique de l'eau non traitée et configuré pour commander le module de commutation d'itinéraire (36) pour commuter les itinéraires en fonction de la conductivité électrique déterminée par le module de détermination de conductivité électrique (34), le module de commutation d'itinéraire (36) comprenant une vanne de commutation électromagnétique (28) configuré pour déplacer un tiroir pour commuter entre les itinéraires en réponse à une instruction provenant du dispositif de commande (10).

2. Système de filtration d'eau (1) selon la revendication 1, comprenant en outre un panneau solaire qui est séparé du générateur photovoltaïque et configuré pour produire une alimentation en énergie pour la charge, le panneau solaire étant configuré pour être relié de manière détachable à une unité de connexion électrique (39) fournie à la structure (4).

3. Système de filtration d'eau (1) selon la revendication 1 ou 2, dans lequel le mécanisme d'alimentation en énergie (3) inclut une unité de connexion de système d'alimentation secteur (37) configurée pour recevoir une alimentation en énergie fournie à partir d'un système d'alimentation secteur (41).

4. Système de filtration d'eau (1) selon l'une quelconque des revendications 1 à 3, dans lequel la structure (4) comprend un conteneur d'expédition.
